# EUROPÄISCHE PATENTSCHRIFT

(11) **EP 4 105 089 B1**
(45) Veröffentlichungstag und Bekanntmachung des Hinweises auf die Patenterteilung: **14.08.2024**
(21) Anmeldenummer: 21179422.7
(22) Anmeldetag: 15.06.2021
(51) Int. Cl.: B60S 3/04, B08B 3/02

(54) **AUFLIEGER-CONTAINER UND AUTOREIFENWASCHANLAGE**
TRAILER CONTAINER AND TYRE WASHING SYSTEM
CONTENEUR DE SEMI-REMORQUE ET INSTALLATION DE LAVAGE DES PNEUS

(43) Veröffentlichungstag der Anmeldung: 21.12.2022
(73) Patentinhaber: 4Wheels Services GmbH, 40221 Düsseldorf (DE)
(72) Erfinder: Ciecior, Gregor, 40789 Monheim (DE)
(74) Vertreter: Paul & Albrecht Patentanwälte PartG mbB

(56) Entgegenhaltungen:
- AU-A1- 2009 233 610
- DE-A1- 102007 009 805
- DE-A1- 102008 040 997
- DE-U1- 29 815 892
- US-A1- 2003 061 674
- US-A1- 2013 167 318

## Beschreibung

Die vorliegende Erfindung betrifft einen Aufliege-Container.

Autos werden in Abhängigkeit von der Jahreszeit häufig wahlweise mit Sommer- oder Winterrädern bereift. Werkstätten übernehmen dabei meist den Reifenwechsel und die Einlagerung der nicht genutzten Reifen. Es ist wünschenswert, die Autoreifen zu reinigen, bevor sie eingelagert werden. Zum einen können dem Kunden beim erneuten Räderwechsel gereinigte Autoreifen übergeben werden. Zum anderen werden korrosive Angriffe während der Einlagerung minimiert. Die Reinigung kann grundsätzlich manuell erfolgen. Betriebe, die eine große Anzahl von Autoreifen einlagern, gehen aber immer häufiger dazu über, sich Autoreifenwaschanlagen anzuschaffen, die dazu ausgelegt sind, eine große Anzahl von Autoreifen innerhalb einer kurzen Zeitdauer voll- oder zumindest teilautomatisiert zu reinigen. Ein Nachteil besteht allerdings dahingehend, dass die Anschaffung solcher Autoreifenwaschanlagen recht kostenintensiv ist. Darüber hinaus beanspruchen die im Innerraum aufzustellenden Autoreifenwaschanlagen meist viel Platz, der bei vielen Betrieben nicht zur Verfügung steht. Aber auch bei ausreichendem Raum wird dieser ganzjährig durch die Autoreifenwaschanlage okkupiert, also auch dann, wenn gar keine Autoreifen gereinigt werden müssen, was ebenfalls als nachteilig angesehen wird.

Die Druckschrift US 2003/0061674 A1 offenbart eine Waschanlage für Golfcarts.

Ausgehend von diesem Stand der Technik ist es eine Aufgabe der vorliegenden Erfindung, die zuvor genannten, mit herkömmlichen Autoreifenwaschanlagen einhergehenden Probleme zu lösen.

Zur Lösung dieser Aufgabe schafft die vorliegende Erfindung einen länglichen Aufliege-Container, insbesondere einen 40-Fuß-Aufliege-Container, der dadurch gekennzeichnet ist, dass in diesen eine Autoreifenwaschanlage eingebaut ist. Dank der erfindungsgemäßen Integration einer Autoreifenwaschanlage in einen handelsüblichen Aufliege-Container kann diese problemlos transportiert werden. Der Container kann auf jeder Freifläche und vor allem auch unter freiem Himmel temporär oder dauerhaft aufgestellt werden, was die Flexibilität des Standorts verglichen mit herkömmlichen Autoreifenwaschanlagen deutlich erhöht. Auch eignet sich der erfindungsgemäße Container mit integrierter Autoreifenwaschanlage sehr gut zur Vermietung und kann entsprechend von vielen Betrieben genutzt werden, so dass die Betriebe nicht zwingend mit den hohen Anschaffungskosten belastet werden. Der Wortlaut "eingebaut" ist vorliegend so zu verstehen, dass die Autoreifenwaschanlage dauerhaft an Wandungen des Aufliege-Containers montiert ist, also nicht nur zum Zwecke des kurzfristigen Transports der Autoreifenwaschanlage, und in diesem montierten Zustand betrieben wird.

Erfindungsgemäß umfasst die Autoreifenwaschanlage zumindest eine Reinigungsstation, bevorzugt eine Abwasseraufbereitungseinrichtung, die dazu ausgelegt ist, von der zumindest einen Reinigungsstation kommendes Abwasser aufzubereiten und der Reinigungsstation aufbereitetes Wasser zuzuführen, zumindest einen Schaltschrank und eine Autoreifenfördereinrichtung mit einer Autoreifenaufgabestation, mehreren Autoreifenförderstationen und einer Autoreifenabgabestation, wobei jede Station zumindest einen Transportwegabschnitt eines durchgehenden Transportwegs bildet. Entsprechend können Autoreifen an der Autoreifenaufgabestation aufgegeben, in der Reinigungsstation gereinigt und dann an der Autoreifenabgabestation im gereinigten Zustand entnommen werden. Die Autoreifenaufgabestation und/oder die Autoreifenabgabestation kann/können eine Hubeinrichtung aufweisen, um den zugehörigen Transportwegabschnitt aus einer unteren Aufgabe- oder Abgabestellung in eine obere Förderstellung auf dem Niveau des Transportwegs zu bewegen. Auf diese Weise wird die Handhabung der Autoreifen für den Bediener der Autoreifenwaschanlage deutlich erleichtert. Durch die Abwasseraufbereitungseinrichtung wird die Menge an Frischwasser, die zur Reinigung von Autoreifen erforderlich ist, deutlich reduziert. Grundsätzlich kann die Autoreifenwaschanlage natürlich auch ausschließlich mit Frischwasser betrieben werden, was aus umwelttechnischen Gründen allerdings nicht empfohlen wird.

Die zumindest eine Reinigungsstation und die Stationen der Autoreifenfördereinrichtung bilden bevorzugt eine von oben betrachtete U-förmige Anordnung, um den im Container zur Verfügung stehenden Raum möglichst effizient zu nutzen.

Vorteilhaft wird ein Schenkel der U-förmigen Anordnung allein durch eine oder mehrere Autoreifenförderstationen und die Autoreifenabgabestation gebildet, wobei die durch die Autoreifenförderstation(en) und die Autoreifenabgabestation gebildeten Förderwegabschnitte zwischen einer horizontalen Betriebsposition und einer senkrechten, zu einer Seitenwand des Containers geklappten Wartungsposition bewegbar sind. Während des normalen Betriebs sind die klappbaren Förderwegabschnitte in ihrer horizontalen Betriebsposition angeordnet. Zur Durchführung beispielsweise von Wartungsarbeiten werden sie dann in ihre Wartungsposition bewegt, so dass alle Stationen der Autoreifenreinigungseinrichtung gut erreichbar sind.

Gemäß einer Ausgestaltung der vorliegenden Erfindung sind die Autoreifenaufgabestationen und die Autoreifenabgabestation in einem vorderen Bereich des Containers nahe eines stirnseitigen Containerzugangs positioniert. Entsprechend können zu reinigende Autoreifen ohne Weiteres zugeführt und gereinigte Autoreifen problemlos entnommen werden.

Die Abwasseraufbereitungseinrichtung und der zumindest eine Schaltschrank sind bevorzugt in einem hinteren Bereich des Containers positioniert, der insbesondere über einen separaten Containerzugang zugänglich ist.

Gemäß einer Ausgestaltung der vorliegenden Erfindung sind mehrere Reinigungsstationen vorgesehen, insbesondere in Form einer Vorreinigungsstation, zumindest einer Grobreinigungsstation und zumindest einer Endreinigungsstation. Dank dieses Aufbaus können sehr gute Reinigungsergebnisse erzielt werden.

Vorteilhaft weist die zumindest eine Vorreinigungsstation ein Ultraschallbecken auf. Die Reinigung mittels Ultraschalls zeichnet sich dadurch aus, dass auch sehr hartnäckiger Schmutz gelöst werden kann.

Bevorzugt sind zumindest zwei Vorreinigungsstationen vorgesehen, wobei jede Vorreinigungsstation zwei übereinander angeordnete, sich horizontal erstreckende Förderwegabschnitte bildet, die derart angeordnet und auf- und abwärts motorisiert zwischen zwei Positionen verfahrbar sind, dass in der ersten Position der untere Förderwegabschnitt mit Förderwegabschnitten benachbart angeordneter Stationen fluchtet, und dass in der zweiten Position der obere Förderwegabschnitt mit Förderwegabschnitten benachbart angeordneter Stationen fluchtet, während der untere Förderwegabschnitt in das Ultraschallbecken eingetaucht ist. Die Zeitdauer, die ein Autoreifen in einer Vorreinigungsstation verweilen muss, um gute Vorreinigungsergebnisse zu erzielen, sind meist deutlich länger als diejenigen Zeitdauern, in denen ein Autoreifen unter Erzielung guter Reinigungsergebnisse in einer Grob- oder Endreinigungsstation verweilen muss. Entsprechend kann durch das Vorsehen mehrerer Vorreinigungsstationen die Taktzeit der Autoreifenwaschanlage deutlich verkürzt werden. Dank der Tatsache, dass jede Vorreinigungsstation über zwei übereinander angeordnete Förderwegabschnitte verfügt, kann die stromabwärts angeordnete Vorreinigungsstation auch dann mit zu reinigenden Autoreifen beschickt werden, wenn die erste Vorreinigungsstation bereits besetzt ist.

Bevorzugt weist die Grobreinigungsstation Hochdruckreinigungsdüsen auf, um die Autoreifen mittels Wasserstrahlen hohen Druckes zu reinigen.

Vorteilhaft weist die Endreinigungsstation eine Bürsteneinrichtung auf und ist insbesondere ferner mit Wasserdüsen und/oder Luftdüsen versehen. Entsprechend können die Autoreifen in der Endreinigungsstation gebürstet, über Wasserdüsen gereinigt und anschließend über Luftdüsen getrocknet werden. Gemäß einer Ausgestaltung der vorliegenden Erfindung weist die Reifenwaschanlage ferner eine Autoreifenausrichtungs- und -zentrierstation auf, die bevorzugt stromaufwärts unmittelbar benachbart zu der zumindest einen Reinigungsstation angeordnet ist, insbesondere zur Grobreinigungsstation. Entsprechend können die beispielsweise aus der Vorreinigungsstation kommenden Fahrzeugreifen ausgerichtet und zentriert werden, um dann in der Grobreinigungsstation ordnungsgemäß aufgenommen und bearbeitet werden zu können.

Weitere Vorteile und Merkmale der vorliegenden Erfindung werden anhand der nachfolgenden Beschreibung einer Ausführungsform eines erfindungsgemäßen Containers unter Bezugnahme auf die beiliegende Zeichnung deutlich.

### Darin ist

- Figur 1: eine Draufsicht eines durchsichtig dargestellten Containers gemäß einer Ausführungsform der vorliegenden Erfindung mit einer eingebauten Autoreifenwaschanlage, die sich in einer Betriebsposition befindet;
- Figur 2: eine Stirnseitenansicht des in Figur 1 dargestellten Containers in Richtung des Pfeils II in Figur 1;
- Figur 3: eine Schnittansicht entlang der Linie III-III in Figur 1;
- Figur 4: eine Draufsicht des in Figur 1 dargestellten Containers, wobei sich die Autoreifenwaschanlage in einer Wartungsposition befindet; und
- Figur 5: eine Schnittansicht entlang der Linie V-V in Figur 4.

Gleiche Bezugsziffern bezeichnen nachfolgend gleiche oder gleichartige Bauteile oder Bauteilbereiche.

Die Figuren zeigen einen länglichen Aufliege-Container 1 gemäß einer Ausführungsform der vorliegenden Erfindung. Vorliegend handelt es sich bei dem Container 1 um einen 40-Fuß-Container, der an einer vorderen Stirnseite einen ersten Containerzugang 2 aufweist. Ein weiterer Containerzugang 2 ist im hinteren Bereich an der Längsseite des Containers 1 vorgesehen. Erfindungsgemäß ist in den Container 1 eine Autoreifenwaschanlage 3 fest eingebaut. Die Autoreifenwaschanlage 3 weist vorliegend eine Autoreifenaufgabestation 4, zwei Vorreinigungsstationen 5, eine Autoreifenausrichtungs- und Zentrierstation 6, eine Grobreinigungsstation 7, eine Endreinigungsstation 8, mehrere Autoreifenförderstationen 9 und eine Autoreifenabgabestation 10 auf, die gemeinsam eine von oben betrachtet U-förmige Anordnung bilden, wobei jede Station einen Transportwegabschnitt eines durchgehenden Transportwegs 11 definiert. Ferner umfasst die Autoreifenwaschanlage 3 eine Abwasseraufbereitungseinrichtung 12 sowie einen Schaltschrank 13.

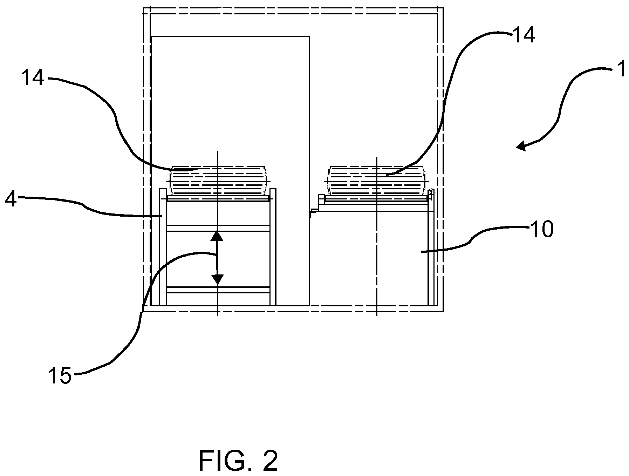

Die Autoreifenaufgabestation 4 und die Autoreifenabgabestation 10 sind vorliegend an den freien Enden der U-förmigen Anordnung im vorderen Bereich des Containers 1 nahe des stirnseitigen Containerzugangs 2 positioniert. Sie bilden jeweils einen Förderwegabschnitt in Form einer angetriebenen Rollenbahn. Ferner sind beide Stationen 4, 10 mit einer nicht näher dargestellten Sensorik versehen, die dazu ausgelegt ist, das Vorhandensein eines Autorreifens 14 zu detektieren. Bevorzugt weisen die Autoreifenaufgabestation 4 und die Autoreifenabgabestation 10 jeweils eine Hubeinrichtung auf, um den zugehörigen Transportwegabschnitt in Richtung des in Figur 2 eingezeichneten Doppelpfeils 15 aus einer unteren Aufgabe- oder Abgabestellung in eine obere Förderstellung auf dem Niveau des Transportwegs 11 zu bewegen. Die Autorreifenaufgabestation 4 weist vorteilhaft eine nicht näher dargestellte Vorzentriereinheit zum Vorzentrieren der aufgegebenen Autoreifen 14 auf, beispielsweise in Form starrer Einweiseprofile. Die Autoreifenabgabestation 10 ist an ihrem freien Ende bevorzugt mit einem Festanschlag versehen, welche die Endposition für gereinigte Autoreifen 14 definiert. Die Rollen der Rollenbahn sind vorteilhaft als Friktionsrollen ausgeführt.

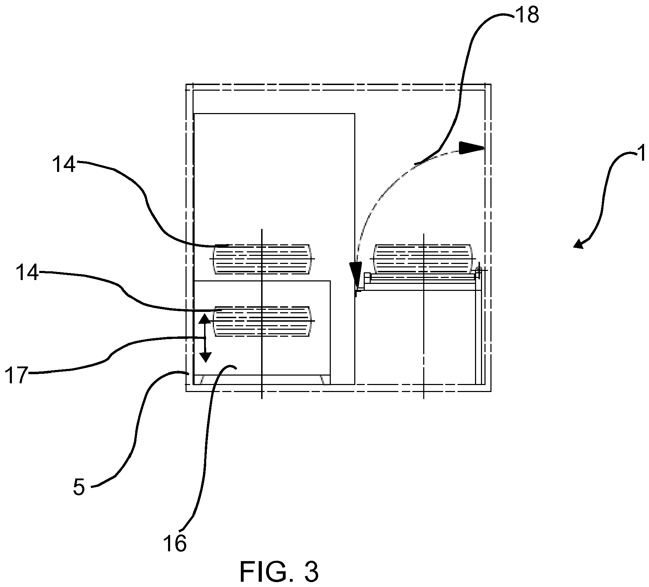

Stromabwärts der Aufgabestation 4 sind die beiden Vorreinigungsstationen 5 hintereinander angeordnet, die vorliegend jeweils ein Ultraschallbecken 16 und eine Sensorik zum Erfassen des Vorhandenseins eines Autoreifens 14 aufweisen. Ferner umfasst jede Vorreinigungsstation 5 zwei übereinander angeordnete, sich horizontal erstreckender, durch angetriebene Rollenbahnen gebildete Förderwegabschnitte, die derart angeordnet und auf- und abwärts in Richtung des in Figur 3 dargestellten Doppelpfeils 17 motorisiert zwischen zwei Positionen und verfahrbar sind, dass in der ersten Position der untere Förderwegabschnitt mit Förderwegabschnitten benachbart angeordneter Stationen fluchtet, und dass in der zweiten Position der obere Förderwegabschnitt mit Förderwegabschnitten benachbart angeordneter Stationen fluchtet, während der untere Förderwegabschnitt in das Ultraschallbecken 16 eingetaucht ist. Figur 3 zeigt einen Autoreifen 14, der auf dem unteren Förderwegabschnitt angeordnet und in das Ultraschallbecken getaucht ist, und einen weiteren auf dem oberen Förderwegabschnitt angeordneten Autoreifen 14.

Hinter den beiden Vorreinigungsstationen 5 ist die Autoreifenausrichtungs-und Zentrierstation 6 vorgesehen, die einen Förderwegabschnitt in Form einer angetriebenen Rollenbahn aufweist und dazu ausgelegt ist, Autoreifen 14 unterschiedlicher Durchmesser und Dicken für die Behandlung in der Grobreinigungsstation 7 auszurichten und zu zentrieren. Die Autoreifenausrichtungs-und Zentrierstation 6 umfasst hierzu vorliegend ein Kamerasystem, dass die Reifengröße, den Reifendurchmesser und die Reifenhöhe erfasst. Die erfassten Daten werden an eine nicht näher dargestellte SPS-Steuerung übermittelt, die dann die Zentriermittel ansteuert. Die Zentriermittel können beispielsweise durch eine Hubeinrichtung zum Anheben und Absenken des Fahrzeugreifens 14 und durch ein Doppelprisma zur Zentrierung gebildet werden.

Stromabwärts der Autoreifenausrichtungs- und Zentrierstation 6 ist nachfolgend die Grobreinigungsstation 7 positioniert. Diese bildet einen durch eine angetriebene Rollenbahn gebildeten Förderwegabschnitt und umfasst vorliegend nicht näher dargestellte Hochdruckreinigungsdüsen, um die Autoreifen 14 mittels Wasserstrahlen hohen Druckes zu reinigen, sowie eine Sensorik zum Erfassen des Vorhandenseins eines Autoreifens 14.

Als nächstes folgt die Endreinigungsstation 8, die einen durch eine angetriebene Rollenbahn gebildeten Förderwegabschnitt aufweist und vorliegend mit einer Bürsteneinrichtung, mit Wasserdüsen sowie mit Luftdüsen versehen ist. Entsprechend können die Autoreifen 14 in der Endreinigungsstation 8 bürstend gereinigt werden, woraufhin das Schmutzwasser über die Wasserdüsen entfernt werden kann. Anschließend kann der Autoreifen 14 über die Luftdüsen getrocknet werden.

Nunmehr folgt eine U-förmige Autoreifenförderstation 9, die den gebogenen Bereich der U-förmigen Anordnung bildet. Auch bei dieser Station 9 wird der zugehörige Transportwegabschnitt durch eine angetriebene Rollenbahn gebildet.

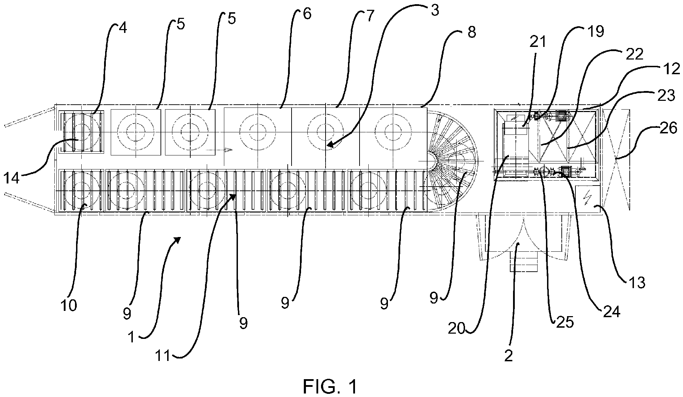

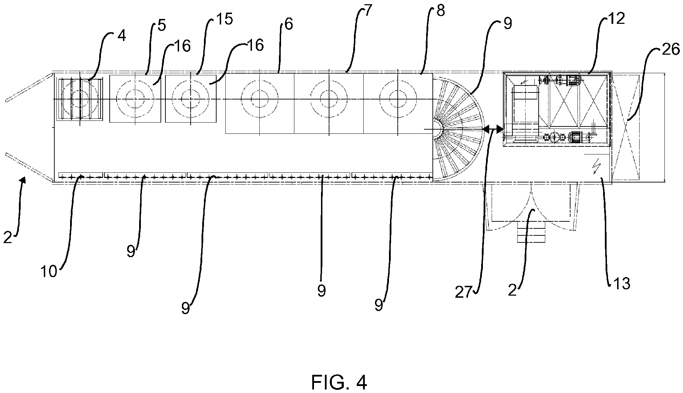

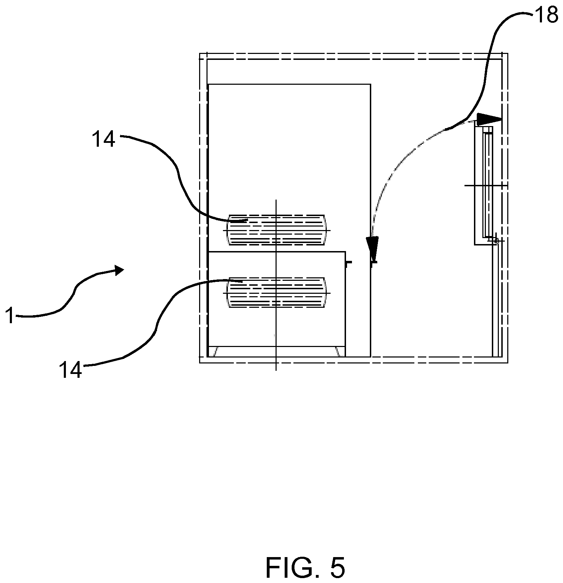

Der stromabwärts gelegene zweite Schenkel der U-förmigen Anordnung wird durch mehrere geradlinige Autoreifenförderstationen 9 und die Autoreifenabgabestationen 10 gebildet, wobei auch hier die zugehörigen Transportwegabschnitte durch angetriebene Rollenbahnen gebildet werden. Eine Besonderheit besteht darin, dass die durch die Autoreifenförderstationen 9 und die Autoreifenabgabestation 10 gebildeten Förderwegabschnitte zwischen einer horizontalen Betriebsposition, die in den Figuren 1 bis 3 gezeigt ist, und einer senkrechten, zu einer Seitenwand des Containers geklappten Wartungsposition in Richtung des Doppelpfeils 18 bewegbar sind, die in den Figuren 4 und 5 dargestellt ist.

Die Abwasseraufbereitungseinrichtung 12 dient dazu, das in den Reinigungsstationen 5, 7 und 8 anfallende Schmutzwasser aufzubereiten und das aufbereitete Wasser zu den Reinigungsstationen 5, 7 und 8 zurückzuführen. Hierzu umfasst die Abwasseraufbereitungseinrichtung 12 vorliegend eine Schmutzwasserpumpe 19, einen Tiefbett-Bandfilter 20, ein unterhalb des Tiefbett-Bandfilters 20 angeordnetes erstes Bad 21, ein über eine Kaskade mit dem ersten Bad 21 verbundenes zweites Bad 22, ein mit dem zweiten Bad 22 über eine Kaskade verbundenes drittes Bad 23, eine Vordruckpumpe 24 und einen Beutelfilter 25.

Ferner ist der Container 1 mit einer Klimaanlage 26 versehen, um die Temperatur innerhalb des Containers 1 in einem vorbestimmten Temperaturbereich zu halten.

Zum Reinigen eines Autoreifens 14 wird dieser in einem ersten Schritt manuell oder automatisch auf der Autoreifenaufgabestation 4 aufgegeben und dann in Richtung der Vorreinigungsstationen 5 bewegt. In einer der Vorreinigungsstationen 5 wird der Autoreifen 14 in das zugehörige Ultraschallbecken 16 abgesenkt, gereinigt und anschließend weiter zur Autoreifenausrichtungs- und Zentrierstation 6 gefördert. Die Behandlungsdauer und die Behandlungsstärke im Ultraschallbecken 16 sind vorliegend einstellbar. Dank der Tatsache, dass jede Vorreinigungsstation 5 über zwei übereinander angeordnete Förderwegabschnitte verfügt, kann die stromabwärts angeordnete Vorreinigungsstation 5 auch dann mit einem zu reinigenden Autoreifen 14 beschickt werden, wenn die erste Vorreinigungsstation 5 bereits besetzt ist. In der Autoreifenausrichtungs- und Zentrierstation 6 werden die Abmessungen des ankommenden Autoreifens 14 erfasst, woraufhin der vorgereinigte Autoreifen 14 dann ausgerichtet und zentriert wird, bevor er der Grobreinigungsstation 7 zugeführt wird. In der Grobreinigungsstation 7 wird der Autoreifen 14 unter Verwendung der Hochdruckdüsen vorgereinigt, die beispielsweise an oberhalb und unterhalb des Autoreifens 14 rotierend positionierten Armen gehalten sind und bei einem Druck von etwa 4 bis 6 bar betrieben werden. Nach der Grobreinigung gelangt der Autoreifen 14 in die Endreinigungsstation 8, in der er bürstend gereinigt wird. Das Schmutzwasser wird über die Wasserdüsen entfernt. Anschließend wird der Autoreifen 14 über die Luftdüsen getrocknet. Nunmehr wird der Autoreifen 14 über die weiteren Autoreifenförderstationen 9 zur Autoreifenabgabestation 10 transportiert, wo er der Autoreifenwaschanlage 3 entnommen werden kann.

Die Reinigungsstationen 5, 7 und 8 können grundsätzlich alle an eine Frischwasserquelle angeschlossen und dann mit Frischwasser betrieben werden. Vorliegend wird während des Betriebs der Autoreifenwaschanlage 3 aber das Schmutzwasser über entsprechende Leitungen aus den Reinigungsstationen 5, 7 und 8 mit der Schmutzwasserpumpe 19 abgesaugt und in den Tiefbett-Bandfilter 20 gefördert. Das in dem Tiefbett-Bandfilter 20 gefilterte Schmutzwasser läuft dann in das erste Bad 21, dann über die zugehörige Kaskade in das zweite Bad 22 und schließlich über die weitere Kaskade in das dritte Bad 23, wobei sich in den Bädern 21, 22 und 23 jeweils im Schmutzwasser enthaltene Verunreinigungen absetzen. Aus dem dritten Bad 23 wird dann das vorgereinigte Wasser über die Vordruckpumpe 24 abgesaugt, durch den Beutelfilter 25 geleitet und dann zurück zu den Reinigungsstationen 5, 7 und 8 gefördert.

Zu Zwecken der Wartung der Autoreifenwaschanlage 3 werden die Förderwegabschnitte des stromabwärts gelegenen Schenkels der U-förmigen Anordnung aus der horizontalen Betriebsposition in die senkrechte Wartungsposition überführt. Nunmehr sind die Autoreifenaufgabestationen 4, die Vorreinigungsstationen 5, die Autoreifenausrichtungs- und Zentrierstation 6, die Grobreinigungsstation 7 und die Endreinigungsstation 8 für das Wartungspersonal ohne weiteres zugänglich. Die Autoreifenförderstation 9, die den bogenförmigen Abschnitt der U-förmigen Anordnung bildet, kann in Richtung des in Figur 4 dargestellten Doppelpfeils 27 bewegbar ausgeführt sein, so dass das Wartungspersonal die Endreinigungsstation 8 erreichen kann.

Es sollte klar sein, dass die zuvor beschriebene Ausführungsform nur als Beispiel dient und nicht als einschränkend zu verstehen ist. Vielmehr sind Modifikationen und Änderungen hinsichtlich der zuvor beschriebenen Ausführungsform möglich, ohne den Schutzbereich der vorliegenden Anmeldung zu verlassen, der durch die beiliegenden Ansprüche definiert ist.

### Bezugsziffernliste

- 1: Container
- 2: Containerzugang
- 3: Autoreifenwaschanlage
- 4: Autoreifenaufgabestation
- 5: Vorreinigungsstation
- 6: Autoreifenausrichtungs- und Zentrierstation
- 7: Grobreinigungsstation
- 8: Endreinigungsstation
- 9: Autoreifenförderstation
- 10: Autoreifenabgabestation
- 11: Transportweg
- 12: Abwasseraufbereitungseinrichtung
- 13: Schaltschrank
- 14: Autoreifen
- 15: Doppelpfeil
- 16: Ultraschallbecken
- 17: Doppelpfeil
- 18: Doppelpfeil
- 19: Schmutzwasserpumpe
- 20: Tiefbett-Bandfilter
- 21: Bad
- 22: Bad
- 23: Bad
- 24: Vordruckpumpe
- 25: Beutelfilter
- 26: Klimaanlage
- 27: Doppelpfeil

## Patentansprüche

1. Länglicher Aufliege-Container (1), insbesondere 40 Fuß Aufliege-Container (1), **dadurch gekennzeichnet, dass** in diesen eine Autoreifenwaschanlage (3) eingebaut ist, wobei die Autoreifenwaschanlage (3) zumindest eine Reinigungsstation (5, 7, 8), zumindest einen Schaltschrank (13) und eine Autoreifenfördereinrichtung mit einer Autoreifenaufgabestation (4), mehreren Autoreifenförderstationen (9) und einer Autoreifenabgabestation (10) umfasst, wobei jede Station (4, 5, 7, 8, 9, 10) zumindest einen Transportwegabschnitt eines durchgehenden Transportwegs (11) bildet.

2. Container (1) nach Anspruch 1, **dadurch gekennzeichnet, dass** die Autoreifenwaschanlage (3) eine Abwasseraufbereitungseinrichtung (12) umfasst, die dazu ausgelegt ist, von der zumindest einen Reinigungsstation (5, 7, 8) kommendes Abwasser aufzubereiten und der Reinigungsstation (5, 7, 8) aufbereitetes Wasser zuzuführen,

3. Container (1) nach Anspruch 1 oder 2, **dadurch gekennzeichnet, dass** die zumindest eine Reinigungsstation (5, 7, 8) und die Stationen (4, 9, 10) der Autoreifenfördereinrichtung eine von oben betrachtet U-förmige Anordnung bilden.

4. Container (1) nach Anspruch 3, **dadurch gekennzeichnet, dass** ein Schenkel der U-förmigen Anordnung allein durch eine oder mehrere Autoreifenförderstationen (9) und die Autoreifenabgabestation (10) gebildet wird, wobei die durch die Autoreifenförderstation(en) (9) und die Autoreifenabgabestation (10) gebildeten Förderwegabschnitte zwischen einer horizontalen Betriebsposition und einer senkrechten, zu einer Seitenwand des Containers (1) geklappten Wartungsposition bewegbar sind.

5. Container (1) nach einem der Ansprüche 2 bis 4, **dadurch gekennzeichnet, dass** die Autoreifenaufgabestation (4) und die Autoreifenabgabestation (10) in einem vorderen Bereich des Containers (1) nahe eines stirnseitigen Containerzugangs (2) positioniert sind.

6. Container (1) nach Anspruch 5, **dadurch gekennzeichnet, dass** die Abwasseraufbereitungseinrichtung (12) und der zumindest einen Schaltschrank (13) in einem hinteren Bereich des Containers (1) positioniert sind, der bevorzugt über einen separaten Containerzugang (2) zugänglich ist.

7. Container (1) nach einem der Ansprüche 2 bis 6, **dadurch gekennzeichnet, dass** mehrere Reinigungsstationen (5, 7, 8) vorgesehen sind, insbesondere in Form zumindest einer Vorreinigungsstation (5), zumindest einer Grobreinigungsstation (7) und zumindest einer Endreinigungsstation (8).

8. Container (1) nach Anspruch 7, **dadurch gekennzeichnet, dass** die zumindest eine Vorreinigungsstation (5) ein Ultraschallbecken (16) aufweist.

9. Container (1) nach Anspruch 8, **dadurch gekennzeichnet, dass** zumindest zwei Vorreinigungsstationen (5) vorgesehen sind, und dass jede Vorreinigungsstation (5) zwei übereinander angeordnete, sich horizontal erstreckende Förderwegabschnitte bildet, die derart angeordnet und auf- und abwärts motorisiert zwischen zwei Positionen verfahrbar sind, dass in der ersten Position der untere Förderwegabschnitt mit Förderwegabschnitten benachbart angeordneter Stationen fluchtet, und dass in der zweiten Position der obere Förderwegabschnitt mit Förderwegabschnitten benachbart angeordneter Stationen fluchtet, während der untere Förderwegabschnitt in das Ultraschallbecken (16) eingetaucht ist.

10. Container (1) nach einem der Ansprüche 7 bis 9, **dadurch gekennzeichnet, dass** die Grobreinigungsstation (8) Hochdruckreinigungsdüsen aufweist.

11. Container (1) nach einem der Ansprüche 7 bis 10, **dadurch gekennzeichnet, dass** Endreinigungsstation (9) eine Bürsteneinrichtung aufweist, bevorzugt ferner Wasserdüsen und/oder Luftdüsen.

12. Container (1) nach einem der Ansprüche 2 bis 11, **dadurch gekennzeichnet, dass** die Autoreifenwaschanlage (3) ferner eine Autoreifenausrichtungs- und zentrierstation (6) aufweist, die bevorzugt stromaufwärts unmittelbar benachbart zu der zumindest einen Reinigungsstation (7) angeordnet ist, insbesondere zur Grobreinigungsstation.

## Claims

1. An elongate trailer container (1), in particular a 40-foot trailer container (1), **characterised in that** a car tyre washing system (3) is installed therein, the car tyre washing system (3) comprising at least one cleaning station (5, 7, 8), at least one switch cabinet (13) and a car tyre conveying device with a car tyre loading station (4), several car tyre conveying stations (9) and a car tyre discharge station (10), wherein each station (4, 5, 7, 8, 9, 10) forms at least one transport path section of a continuous transport path (11).

2. Container (1) according to claim 1, **characterised in that** the car tyre washing system (3) comprises a waste water treatment device (12) which is designed to treat waste water coming from the at least one cleaning station (5, 7, 8) and to supply treated water to the cleaning station (5, 7, 8),

3. Container (1) according to claim 1 or 2, **characterised in that** the at least one cleaning station (5, 7, 8) and the stations (4, 9, 10) of the car tyre conveyor form a U-shaped arrangement when viewed from above.

4. Container (1) according to claim 3, **characterised in that** one leg of the U-shaped arrangement is formed solely by one or more car tyre conveyor stations (9) and the car tyre delivery station (10), the conveyor path sections formed by the car tyre conveyor station(s) (9) and the car tyre delivery station (10) being movable between a horizontal operating position and a vertical maintenance position folded towards a side wall of the container (1).

5. Container (1) according to one of claims 2 to 4, **characterised in that** the car tyre loading station (4) and the car tyre unloading station (10) are positioned in a front region of the container (1) close to a front-side container access (2).

6. Container (1) according to claim 5, **characterised in that** the waste water treatment device (12) and the at least one switch cabinet (13) are positioned in a rear area of the container (1), which is preferably accessible via a separate container access (2).

7. Container (1) according to one of claims 2 to 6, **characterised in that** a plurality of cleaning stations (5, 7, 8) are provided, in particular in the form of at least one pre-cleaning station (5), at least one coarse cleaning station (7) and at least one final cleaning station (8).

8. Container (1) according to claim 7, **characterised in that** the at least one pre-cleaning station (5) has an ultrasonic tank (16).

9. Container (1) according to claim 8, **characterised in that** at least two pre-cleaning stations (5) are provided, and **in that** each pre-cleaning station (5) forms two horizontally extending conveyor path sections arranged one above the other, which are arranged in such a way and can be moved up and down in a motorised manner between two positions, that in the first position the lower conveyor path section is aligned with conveyor path sections of neighbouring stations, and that in the second position the upper conveyor path section is aligned with conveyor path sections of neighbouring stations, while the lower conveyor path section is immersed in the ultrasonic tank (16).

10. Container (1) according to one of claims 7 to 9, **characterised in that** the coarse cleaning station (8) has high-pressure cleaning nozzles.

11. Container (1) according to one of claims 7 to 10, **characterised in that** the final cleaning station (9) has a brush device, preferably also water nozzles and/or air nozzles.

12. Container (1) according to one of claims 2 to 11, **characterised in that** the car tyre washing system (3) further comprises a car tyre alignment and centring station (6), which is preferably arranged upstream directly adjacent to the at least one cleaning station (7), in particular to the coarse cleaning station.

## Revendications

1. Conteneur semi-remorque allongé (1), en particulier conteneur semi-remorque de 40 pieds (1), **caractérisé en ce qu'**une installation de lavage de pneus de voiture (3) est montée dans celui-ci, l'installation de lavage de pneus de voiture (3) comprenant au moins une station de nettoyage (5, 7, 8), au moins une armoire de commande (13) et un dispositif de transport de pneus de voiture avec une station de chargement de pneus de voiture (4), plusieurs stations de transport de pneus de voiture (9) et une station de déchargement de pneus de voiture (10), chaque station (4, 5, 7, 8, 9, 10) formant au moins une section de trajet de transport d'un trajet de transport continu (11).

2. Conteneur (1) selon la revendication 1, **caractérisé en ce que** l'installation de lavage de pneus de voiture (3) comprend un dispositif de traitement des eaux usées (12) qui est conçu pour traiter les eaux usées provenant de la au moins une station de nettoyage (5, 7, 8) et pour fournir de l'eau traitée à la station de nettoyage (5, 7, 8),

3. Conteneur (1) selon la revendication 1 ou 2, **caractérisé en ce que** le au moins une station de nettoyage (5, 7, 8) et les stations (4, 9, 10) du dispositif de transport de pneus de voiture forment un agencement en forme de U vu de dessus.

4. Conteneur (1) selon la revendication 3, **caractérisé en ce qu'**une branche de l'agencement en U est formée uniquement par un ou plusieurs stations de transport de pneus de voiture (9) et la station de distribution de pneus de voiture (10), les sections de trajet de transport formées par le ou les stations de transport de pneus de voiture (9) et la station de distribution de pneus de voiture (10) étant mobiles entre une position de fonctionnement horizontale et une position de maintenance verticale repliée vers une paroi latérale du conteneur (1).

5. Conteneur (1) selon l'une quelconque des revendications 2 à 4, **caractérisé en ce que** la station de chargement de pneus de voiture (4) et la station de déchargement de pneus de voiture (10) sont positionnées dans une zone avant du conteneur (1) à proximité d'un accès frontal (2) du conteneur.

6. Conteneur (1) selon la revendication 5, **caractérisé en ce que** le dispositif de traitement des eaux usées (12) et l'au moins une armoire électrique (13) sont positionnés dans une zone arrière du conteneur (1), qui est de préférence accessible par un accès séparé au conteneur (2).

7. Conteneur (1) selon l'une des revendications 2 à 6, **caractérisé en ce que** plusieurs stations de nettoyage (5, 7, 8) sont prévues, notamment sous la forme d'au moins une station de pré-nettoyage (5), d'au moins une station de nettoyage grossier (7) et d'au moins une station de nettoyage final (8).

8. Conteneur (1) selon la revendication 7, **caractérisé en ce que** ladite au moins une station de pré-nettoyage (5) comprend un bac à ultrasons (16).

9. Conteneur (1) selon la revendication 8, **caractérisé en ce qu'**au moins deux stations de pré-nettoyage (5) sont prévues, et **en ce que** chaque station de pré-nettoyage (5) forme deux sections de trajet de transport superposées s'étendant horizontalement, qui sont disposées de telle manière et peuvent être déplacées vers le haut et vers le bas par un moteur entre deux positions, dans la première position, la section de trajet de transport inférieure est alignée avec des sections de trajet de transport de stations disposées de manière adjacente, et dans la deuxième position, la section de trajet de transport supérieure est alignée avec des sections de trajet de transport de stations disposées de manière adjacente, tandis que la section de trajet de transport inférieure est immergée dans le bac à ultrasons (16).

10. Conteneur (1) selon l'une des revendications 7 à 9, **caractérisé en ce que** la station de nettoyage grossier (8) comporte des buses de nettoyage haute pression.

11. Conteneur (1) selon l'une des revendications 7 à 10, **caractérisé en ce que** la station de nettoyage final (9) présente un dispositif de brossage, de préférence en outre des buses d'eau et/ou des buses d'air.

12. Conteneur (1) selon l'une quelconque des revendications 2 à 11, **caractérisé en ce que** l'installation de lavage de pneus de véhicule (3) comprend en outre un poste d'alignement et de centrage de pneus de véhicule (6), de préférence situé en amont et immédiatement adjacent audit au moins un poste de nettoyage (7), en particulier au poste de nettoyage grossier.
